# EUROPEAN PATENT APPLICATION

(11) **EP 4 404 444 A1**
(43) Date of publication of application: **24.07.2024**
(21) Application number: 22883170.7
(22) Date of filing: 08.07.2022
(51) Int. Cl.: H02K 15/03, H02K 1/2733

(54) **ROTOR MANUFACTURING METHOD, ROTOR, AND ROTATING ELECTRIC MACHINE**

(30) Priority: 19.10.2021 JP 2021171115
(71) Applicant: NHK Spring Co., Ltd., Kanagawa 236-0004 (JP)
(72) Inventor: KAMEDA, Yohei, Yokohama-shi, Kanagawa 236-0004 (JP); MINEDA, Yoshikazu, Yokohama-shi, Kanagawa 236-0004 (JP); NAKAYAMA, Soichi, Yokohama-shi, Kanagawa 236-0004 (JP)
(74) Representative: DREISS Patentanwälte PartG mbB
(86) International application number: PCT/JP2022/027169
(87) International publication number: WO 2023/067858

(57) **Abstract**

The present invention prevents the strength from being lowered due to scarring of a magnet reinforcing pipe. In the present rotor manufacturing method, when manufacturing a rotor (10) comprising a rotor shaft (18), a permanent magnet (20) held on the outer circumference of the rotor shaft (18) via a resin (24), and a magnet reinforcing pipe (22) formed in a cylindrical shape and covering the permanent magnet (20) from the outer circumferential side, the liquid resin (24) is filled between the rotor shaft (18) and the permanent magnet (20), and the permanent magnet (20) is broken and the magnet reinforcing pipe (22) is expanded in diameter by the filling pressure of the resin (24).

## Description

### Technical Field

The present disclosure relates to a rotating electric machine, and in particular to a rotor and manufacturing method thereof.

### Background Art

In a magnet fixing method for a permanent magnet rotating electric machine described in Japanese Patent Application Laid-Open (JP-A) No. 2005-312250, after a permanent magnet has been fixed to an outer surface of a rotor shaft using a fixing means, the permanent magnet is, together with the rotor shaft, press-fitted into a cylinder shaped binding ring (magnet reinforcement pipe). The entire outer surface of the permanent magnet is covered by this magnet reinforcement pipe, and the permanent magnet is fastened and fixed to the rotor shaft. This thereby enables sufficient fixing strength to be obtained for the permanent magnet to counter the strength of centrifugal force during high speed rotation, enabling fragments of the permanent magnet to be prevented from flying off.

### SUMMARY OF INVENTION

### Technical Problem

In the prior art described above, there is a concern that the magnet reinforcement pipe might become scratched when the permanent magnet is being press-fitted into the magnet reinforcement pipe, lowering the strength of the magnet reinforcement pipe strength.

In consideration of the above circumstances, an object of the present disclosure is to obtain a rotor manufacturing method, rotor, and rotating electric machine that are capable of preventing a lowering of strength due to scratching of a magnet reinforcement pipe.

### Solution to Problem

A rotor manufacturing method of a first aspect is a manufacturing method for a rotor including a rotor shaft, a permanent magnet retained at an outer periphery of the rotor shaft with a resin interposed therebetween, and a magnet reinforcement pipe formed in a cylindrical shape and covering the permanent magnet from an outer peripheral side. The rotor manufacturing method includes filling the resin in liquid form between the rotor shaft and the permanent magnet, breaking the permanent magnet using charging pressure of the resin, and expanding a diameter of the magnet reinforcement pipe.

In the rotor manufacturing method of the first aspect, the resin is filled in liquid form between the rotor shaft and the permanent magnet when manufacturing the rotor including the rotor shaft, the permanent magnet retained at the outer periphery of the rotor shaft with the resin interposed therebetween, and the magnet reinforcement pipe formed in a cylindrical shape and covering the permanent magnet from the outer peripheral side. The permanent magnet is broken by the charging pressure of the resin, and the magnet reinforcement pipe is expanded in diameter. This means that compression stress can be imparted to the permanent magnet between the magnet reinforcement pipe and the resin without scratching the magnet reinforcement pipe, enabling sufficient fixing strength to be obtained for the permanent magnet. This accordingly enables the strength to be prevented from falling due to scratching of the magnet reinforcement pipe.

A rotor manufacturing method of a second aspect is the first aspect, wherein a groove extending along an axial direction is formed at the outer periphery of the rotor shaft, and the resin is filled in liquid form between the rotor shaft and the permanent magnet through the groove.

In the rotor manufacturing method of the second aspect, the resin is filled in liquid form between the rotor shaft and the permanent magnet through the groove formed at the outer periphery of the rotor shaft, and so this enables a gap (clearance) between the rotor shaft and the permanent magnet to be set small. As a result thereof, there is no need for a positioning tool to achieve concentricity between the rotor shaft and the permanent magnet.

A rotor manufacturing method of the third aspect is the first aspect, wherein a collar-shaped collar portion is formed at part of the outer periphery of the rotor shaft, a gap is formed between the rotor shaft and the permanent magnet by an outer peripheral face of the collar portion being engaged with an inner peripheral face of the permanent magnet, and the resin is filled in liquid form into the gap.

In the rotor manufacturing method of the third aspect, the gap for filling the resin in liquid form between the rotor shaft and the permanent magnet is formed by engaging the outer peripheral face of the collar portion formed at part of the outer periphery of the rotor shaft with the inner peripheral face of the permanent magnet. In this aspect too, there is no need for a positioning tool to achieve concentricity between the rotor shaft and the permanent magnet.

A rotor manufacturing method of a fourth aspect is the first aspect, wherein a pair of circular plate-shaped end rings are arranged at two axial direction sides with respect to the permanent magnet, a gap is formed between the rotor shaft and the permanent magnet by passing the rotor shaft through a center of each of the pair of end rings and also by engaging an outer peripheral face of each of the pair of end rings with an inner peripheral face of the magnet reinforcement pipe, and the resin is filled in liquid form into the gap through a resin-filling hole formed in at least one of the pair of end rings.

In the rotor manufacturing method of the fourth aspect, the gap for filling the resin in liquid form between the rotor shaft and the permanent magnet can be formed while also achieving concentricity between the rotor shaft and the permanent magnet by using the pair of end rings. In addition thereto, the resin can be filled in liquid form into the above gap through the resin-filling hole formed to at least one of the pair of end rings. In this aspect too, there is no need for a positioning tool to achieve concentricity between the rotor shaft and the permanent magnet.

A rotor manufacturing method of a fifth aspect is the first aspect, wherein a pair of circular plate-shaped end rings are arranged at two axial direction sides with respect to the permanent magnet, a gap is formed between the rotor shaft and the permanent magnet by passing the rotor shaft through a center of each of the pair of end rings and also engaging an outer peripheral face of each of the pair of end rings with an inner peripheral face of the magnet reinforcement pipe, and the resin is filled in liquid form into the gap through a resin-filling flow path formed in the rotor shaft.

In the rotor manufacturing method of the fifth aspect, the gap for filling the resin in liquid form between the rotor shaft and the permanent magnet can be formed while also achieving concentricity between the rotor shaft and the permanent magnet by using the pair of end rings. In addition thereto, the resin can be filled in liquid form into the above gap through the resin-filling flow path formed in the rotor shaft. In this aspect too, there is no need for a positioning tool to achieve concentricity between the rotor shaft and the permanent magnet.

A rotor manufacturing method of a sixth aspect is any one of the first aspect to the fifth aspect, wherein a notch to serve as an origin point when breaking the permanent magnet is formed at an inner peripheral face of the permanent magnet.

In the sixth aspect, the permanent magnet can be broken in a pre-set manner due to the notch formed at the inner peripheral face of the permanent magnet.

A rotor of a seventh aspect includes a rotor shaft, a permanent magnet retained at an outer periphery of the rotor shaft with a resin interposed therebetween, and a magnet reinforcement pipe formed in a cylindrical shape and covering the permanent magnet from the outer peripheral side, wherein a crack is formed spanning in a radial direction of the permanent magnet and the crack is filled with the resin.

In the rotor of the seventh aspect, the permanent magnet is retained at the outer periphery of the rotor shaft with the resin interposed therebetween, and the permanent magnet is covered from the outer peripheral side by the magnet reinforcement pipe formed in the cylindrical shape. The crack is formed in the permanent magnet spanning in the radial direction, and the crack is filled with the resin. This rotor can be manufactured by the rotor manufacturing method of the first aspect, and so similar operation and advantageous effects are achieved to those of the first aspect.

A rotor of an eighth aspect is the seventh aspect, wherein a groove extending along an axial direction is formed at an outer periphery of the rotor shaft, and the groove is filled with the resin.

In the rotor of the eighth aspect the groove formed in the outer periphery of the rotor shaft is filled with the resin. This rotor can be manufactured by the rotor manufacturing method of the second aspect, and so similar operation and advantageous effects are achieved to those of the second aspect.

A rotor of a ninth aspect is the seventh aspect, wherein an outer peripheral face of a collar portion formed in a collar shape at part of an outer periphery of the rotor shaft is engaged with an inner peripheral face of the permanent magnet, and a gap formed between the rotor shaft and the permanent magnet is filled with the resin.

In the rotor of the ninth aspect, the outer peripheral face of the collar portion formed at part of the outer periphery of the rotor shaft is engaged with the inner peripheral face of the permanent magnet, and the gap formed between the rotor shaft and the permanent magnet is filled with the resin. This rotor can be manufactured by the rotor manufacturing method of the third aspect, and so similar operation and advantageous effects are achieved to those of the third aspect.

A rotor of a tenth aspect is the seventh aspect, further including a pair of circular plate-shaped end rings arranged at two axial direction sides with respect to the permanent magnet, the rotor shaft passing through a center of each of the end rings, and an outer peripheral face of each of the end rings being engaged with an inner peripheral face of the magnet reinforcement pipe, wherein a gap formed between the rotor shaft and the permanent magnet and a resin-filling hole formed in at least one of the pair of end rings are filled with the resin.

In the rotor of the tenth aspect, the rotor shaft passes through a center of each of the pair of end rings arranged at the two axial direction sides with respect to the permanent magnet, and the outer peripheral face of the pair of end rings are engaged with the inner peripheral face of the magnet reinforcement pipe. The gap formed between the rotor shaft and the permanent magnet and the resin-filling hole formed to at least one of the pair of end rings are filled with the resin. This rotor can be manufactured by the rotor manufacturing method of the fourth aspect, and so similar operation and advantageous effects are achieved to those of the fourth aspect.

A rotor of an eleventh aspect is the seventh aspect, further including a pair of circular plate-shaped end rings arranged at two axial direction sides with respect to the permanent magnet, with the rotor shaft passing through a center of each of the end rings, and an outer peripheral face of each of the end rings being engaged with an inner peripheral face of the magnet reinforcement pipe, wherein a gap formed between the rotor shaft and the permanent magnet and a resin-filling flow path formed in the rotor shaft are filled with the resin.

In the rotor of the eleventh aspect, the rotor shaft passes through a center of each of the pair of end rings arranged at the two axial direction sides with respect to the permanent magnet, and the outer peripheral face of the pair of end rings are engaged with the inner peripheral face of the magnet reinforcement pipe. The gap formed between the rotor shaft and the permanent magnet and the resin-filling flow path formed in the rotor shaft are filled with the resin. This rotor can be manufactured by the rotor manufacturing method of the fifth aspect, and so similar operation and advantageous effects are achieved to those of the fifth aspect.

A rotating electric machine of a twelfth aspect includes the rotor of any one of the seventh aspect to the eleventh aspect, and a stator that generates a rotating magnetic field for the rotor.

In the rotating electric machine of the twelfth aspect, the rotor is rotated by the rotating magnetic field generated by the stator. This rotor is any one of the seventh aspect to the eleventh aspect, and so the advantageous effects described above are obtained. Advantageous Effects

As described above, the rotor manufacturing method, rotor, and rotating electric machine according to the present disclosure enable a drop in strength due to scratching of the magnet reinforcement pipe to be prevented from occurring.

### BRIEF DESCRIPTION OF DRAWINGS

Fig. 1 is a cross-section illustrating a configuration of relevant portions of a rotating electric machine according to a first exemplary embodiment.
Fig. 2 is a cross-section illustrating a configuration of a rotor according to the first exemplary embodiment.
Fig. 3 is a cross-section illustrating a section taken along line F3-F3 of Fig. 2.
Fig. 4 is a cross-section illustrating a state in a resin filling process of a rotor manufacturing method according to the first exemplary embodiment.
Fig. 5 is a cross-section illustrating a section taken along line F5-F5 of Fig. 4.
Fig. 6 is a cross-section illustrating a state in a resin filling process of a rotor manufacturing method according to a second exemplary embodiment.
Fig. 7 is a cross-section illustrating a section taken along line F7-F7 of Fig. 6.
Fig. 8 is a cross-section illustrating a configuration of a rotor according to the second exemplary embodiment.
Fig. 9 is a cross-section illustrating a state in a resin filling process of a rotor manufacturing method according to a third exemplary embodiment.
Fig. 10 is a cross-section illustrating a configuration of a rotor according to the third exemplary embodiment.
Fig. 11 is a cross-section illustrating a state in a resin filling process of a rotor manufacturing method according to a fourth exemplary embodiment.
Fig. 12 is a cross-section illustrating a section taken along line F12-F12 of Fig. 11.
Fig. 13 is a cross-section illustrating a configuration of a rotor according to a fourth exemplary embodiment.
Fig. 14 is a cross-section illustrating a state in a resin filling process of a rotor manufacturing method according to a fifth exemplary embodiment.
Fig. 15 is a cross-section illustrating a section taken along line F15-F15 of Fig. 14.
Fig. 16 is a cross-section illustrating a configuration of a rotor according to the fifth exemplary embodiment.
Fig. 17 is a cross-section illustrating a configuration of a permanent magnet provided to a rotor according to a sixth exemplary embodiment.

### DESCRIPTION OF EMBODIMENTS

### First Exemplary Embodiment

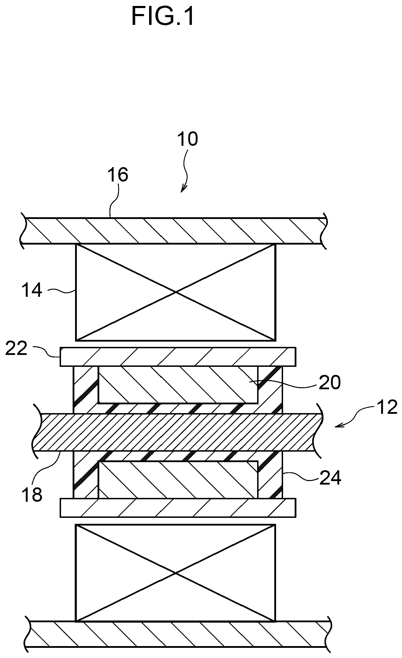

Description follows regarding a rotating electric machine 10, a rotor 12, and a rotor manufacturing method according to a first exemplary embodiment of the present disclosure, with reference to Fig. 1 to Fig. 5. As illustrated in Fig. 1, the rotating electric machine 10 according to the present exemplary embodiment is a surface permanent magnetic (SPM) motor in which a permanent magnet 20 is retained at an outer periphery of the rotor 12. The rotating electric machine 10 includes the rotor 12, a stator 14 that generates a rotating magnetic field for the rotor 12, and a case 16 that houses the rotor 12 and the stator 14. Note that the stator 14 is illustrated schematically in Fig. 1.

As illustrated in Fig. 1 to Fig. 3, the rotor 12 is manufactured by the rotor manufacturing method according to the present exemplary embodiment, and includes a rotor shaft 18, the permanent magnet 20 retained at the outer periphery of the rotor shaft 18 with a resin (resin portion) 24 interposed therebetween, and a magnet reinforcement pipe 22 that covers the permanent magnet 20 from the outer peripheral side thereof. The rotor 12 is rotated about an axis of the rotor shaft 18 by the rotating magnetic field generated by the stator 14.

The rotor shaft 18 is, for example, formed in a cylindrical pillar shape having a constant diameter across the entire axis direction thereof. An axial direction intermediate portion of the rotor shaft 18 is filled with the resin 24. The resin 24 is, for example, a thermoplastic resin such as a polyphenylene sulfide (PPS), a liquid crystal polymer (LCP), or is a thermoset resin such as an epoxy resin. The permanent magnet 20 is fixed to the rotor shaft 18 by the resin 24.

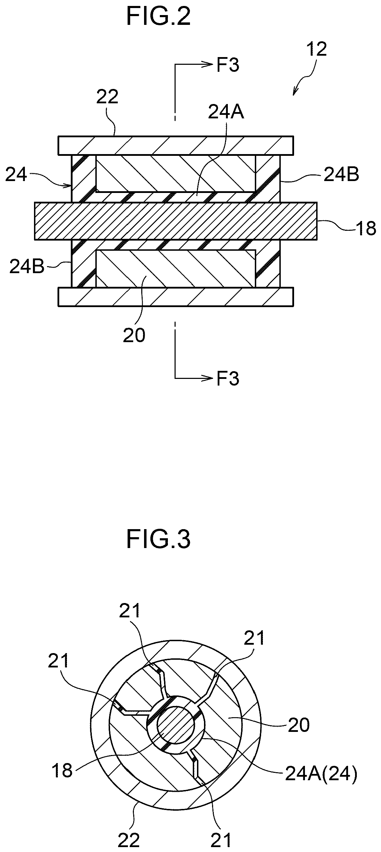

The permanent magnet 20 is molded in a cylindrical shape broken into plural pieces around the circumferential direction, and is disposed coaxially to the rotor shaft 18. Namely, cracks 21 spanning in the radial direction are formed in the permanent magnet 20, and the cracks 21 are filled with the resin 24. In the example illustrated in Fig. 3, there are four cracks 21 formed in the permanent magnet 20. Note that the permanent magnet 20 may be molded in plural pieces divided along the circumferential direction. Such cases results in a configuration in which a break occurs in at least one of the divided bodies configuring the permanent magnet 20 that is divided into plural pieces.

The magnet reinforcement pipe 22 is mounted to the outer periphery of the permanent magnet 20. The magnet reinforcement pipe 22 is, for example, a pipe made from fiber reinforced plastic (FRP) manufactured by a fiber sheet hardened with a resin, and is formed in a cylindrical shape longer in axial direction than the permanent magnet 20. An inner peripheral face of the magnet reinforcement pipe 22 is in close contact with the outer peripheral face of the permanent magnet 20, and covers the entire outer peripheral face of the permanent magnet 20. The magnet reinforcement pipe 22 imparts compression stress to the permanent magnet 20 toward the radial direction inside. Note that the material of the magnet reinforcement pipe 22 may be a metal, such as titanium or the like.

The magnet reinforcement pipe 22 described above is fixed to the rotor shaft 18 through the resin 24. The resin 24 is configured including a cylindrical portion 24A having a cylindrical shape interposed between the rotor shaft 18 and the permanent magnet 20, and a pair of flange portions 24B that jut out in flange shapes from the two axial direction ends of the cylindrical portion 24A. The axial direction dimension of the resin 24 is set slightly shorter than the axial direction dimension of the magnet reinforcement pipe 22. The pair of flange portions 24B are arranged at the two axial direction sides of the permanent magnet 20, and are in axial direction close contact with the permanent magnet 20. The outer peripheral faces of the pair of flange portions 24B are in close contact with the inner peripheral face of the two axial direction ends of the magnet reinforcement pipe 22.

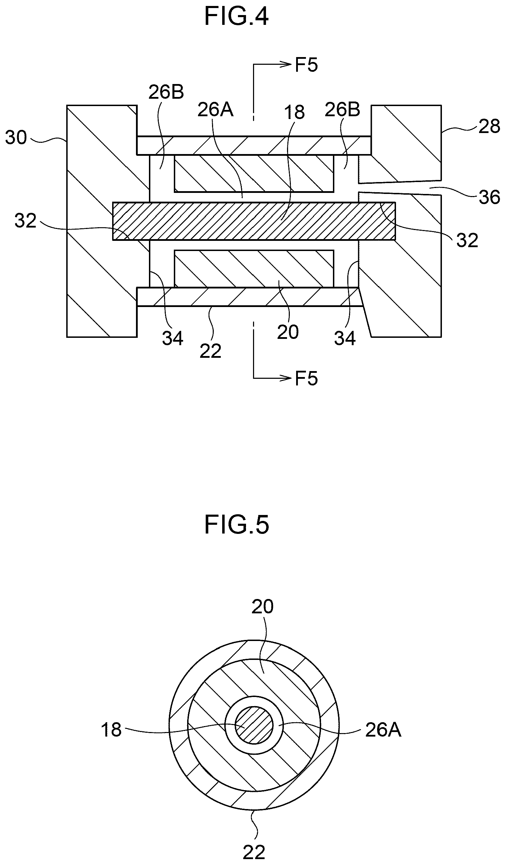

When manufacturing the rotor 12 configured as described above, the rotor shaft 18 and the magnet reinforcement pipe 22 are clamped between a pair of molding molds 28, 30 for use in injection molding, as illustrated in Fig. 4. The pair of molds 28, 30 each includes an axial insertion hole 32 into which the respective two axial direction ends of the rotor shaft 18 are inserted, and fitting projections 34 that fit inside the two axial direction ends of the magnet reinforcement pipe 22. The rotor shaft 18 and the magnet reinforcement pipe 22 are thereby disposed coaxially.

The permanent magnet 20 that has been molded in a cylindrical shape is inserted in advance coaxially inside the magnet reinforcement pipe 22 that is clamped between the molds 28, 30, and the permanent magnet 20 is supported by the pair of molds 28, 30 through the magnet reinforcement pipe 22. An outer diameter dimension of the permanent magnet 20 inserted inside the magnet reinforcement pipe 22 is set the same as an inner diameter dimension of the magnet reinforcement pipe 22 or slightly smaller than the inner diameter dimension of the magnet reinforcement pipe 22. This means that scratching of the magnet reinforcement pipe 22 when the permanent magnet 20 is being inserted inside the magnet reinforcement pipe 22 is prevented.

As illustrated in Fig. 5, a cylindrical shaped gap 26A is formed between the rotor shaft 18 and the permanent magnet 20 supported by the pair of molds 28, 30. A pair of flange shaped gaps 26B in communication with the gap 26A described above are formed between the pair of molds 28, 30 and the permanent magnet 20. The cylindrical shape gap 26A corresponds to the cylindrical portion 24A of the resin 24, and the flange shaped gaps 26B correspond to the flange portions 24B of the resin 24.

A resin-filling gate 36 to communicate with one of the gaps 26B is formed at the one mold 28, and the resin 24 is filled in liquid form through the resin-filling gate 36 and into the gaps 26A, 26B. When this is performed, the permanent magnet 20 is broken by the charging pressure of the high pressure resin 24 being filled into the gaps 26A, 26B. As a result thereof, the charging pressure of the high pressure resin 24 acts on the inner peripheral face of the magnet reinforcement pipe 22, and the magnet reinforcement pipe 22 is expanded in diameter. Then after the resin 24 has hardened, the rotor 12 is discharged from between the pair of molds 28, 30. This completes manufacture of the rotor 12 illustrated in Fig. 2 and Fig. 3. In the completed rotor 12, as illustrated in Fig. 3, the cracks 21 are formed in the permanent magnet 20, and the cracks 21 are filled with the resin 24.

In the rotating electric machine 10 configured as described above, the rotor 12 is rotated by the rotating magnetic field generated by the stator 14. The rotor 12 includes the rotor shaft 18, the permanent magnet 20 retained at the outer periphery of the rotor shaft 18, and the magnet reinforcement pipe 22 covering the cylindrical shaped permanent magnet 20 from the outer peripheral side. The resin 24 is filled in liquid form between the rotor shaft 18 and the permanent magnet 20 when the rotor 12 is being manufactured. The permanent magnet 20 is broken by the charging pressure of the resin 24, and the magnet reinforcement pipe 22 is expanded in diameter. This thereby enables compression stress to be imparted to the permanent magnet 20 between the magnet reinforcement pipe 22 and the resin 24 without scratching the magnet reinforcement pipe 22, enabling sufficient strength for fixing the permanent magnet 20 to be obtained. This enables a drop in strength due to scratching of the magnet reinforcement pipe 22 to be prevented from occurring. As a result thereof, a rotor 12 that is able to withstand centrifugal force during high speed rotation is able to be provided, contributing to an improvement in the quality of the rotor 12.

Moreover, with the prior art described under background art there is a concern that the magnet reinforcement pipe might be worn away when the permanent magnet is being press-fitted into the magnet reinforcement pipe, and that the desired interference is not obtained. Moreover, there is a need for high precision processing of the outer diameter and the inner diameter of the permanent magnet and the magnet reinforcement pipe, respectively, due to the permanent magnet being press-fitted into the magnet reinforcement pipe, with this complicating manufacture. Regarding this point, the present exemplary embodiment is not a configuration in which the permanent magnet 20 is press-fitted into the magnet reinforcement pipe 22, and so the magnet reinforcement pipe 22 can be prevented from wearing and there is also no need for high precision processing of the outer diameter and the inner diameter of the permanent magnet 20 and the magnet reinforcement pipe 22, respectively, facilitating manufacture. Moreover, a reduction in eddy currents is achieved due to the permanent magnet 20 breaking. This thereby enables the performance of the rotating electric machine 10 to be improved.

Next, description follows regarding other exemplary embodiments of the present disclosure. Note that the same reference numerals to those of the already described exemplary embodiments will be appended to basically the same configuration and operation to those of the already described exemplary embodiments, and explanation thereof will be omitted.

### Second Exemplary Embodiment

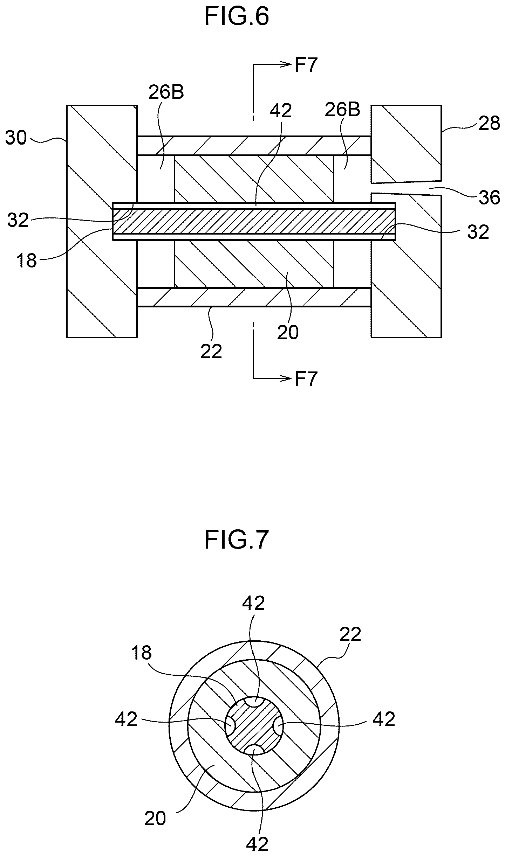

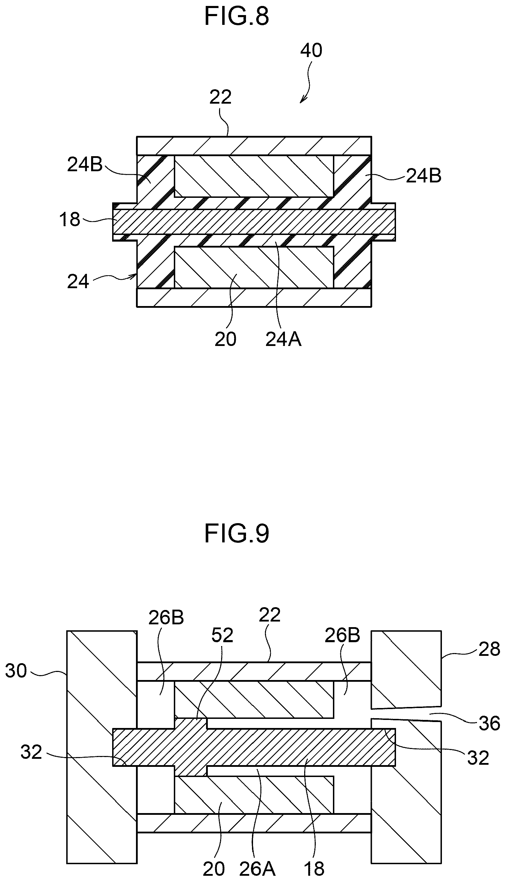

Fig. 6 is a cross-section of a state in a resin filling process in a rotor manufacturing method according to a second exemplary embodiment of the present disclosure, and Fig. 7 illustrates cross-section of a section taken along line F7-F7 of Fig. 6. Fig. 8 illustrates a cross-section of a rotor 40 manufactured by a rotor manufacturing method according to the second exemplary embodiment of the present disclosure. In this exemplary embodiment, the outer diameter dimension of the rotor shaft 18 is set to the same as an inner diameter dimension of the permanent magnet 20 or to slightly smaller than the inner diameter dimension of the permanent magnet 20. Grooves 42 extending along the axial direction is formed at the outer periphery of the rotor shaft 18. The resin 24 is filled in liquid form between the rotor shaft 18 and the permanent magnet 20 through the grooves 42. The permanent magnet 20 is broken by the charging pressure of the resin 24 and the magnet reinforcement pipe 22 is expanded in diameter.

Configuration in the present exemplary embodiment other than that described above is similarly to in the first exemplary embodiment, and basically the same operation and advantageous effects are achieved to those of the first exemplary embodiment. Moreover, in this exemplary embodiment the resin 24 is filled in liquid form between the rotor shaft 18 and the permanent magnet 20 through the grooves 42 formed in the outer periphery of the rotor shaft 18, and so a gap (clearance) between the rotor shaft 18 and the permanent magnet 20 can be set smaller. As a result thereof, there is no need for a positioning tool to achieve concentricity between the rotor shaft 18 and the permanent magnet 20.

### Third Exemplary Embodiment

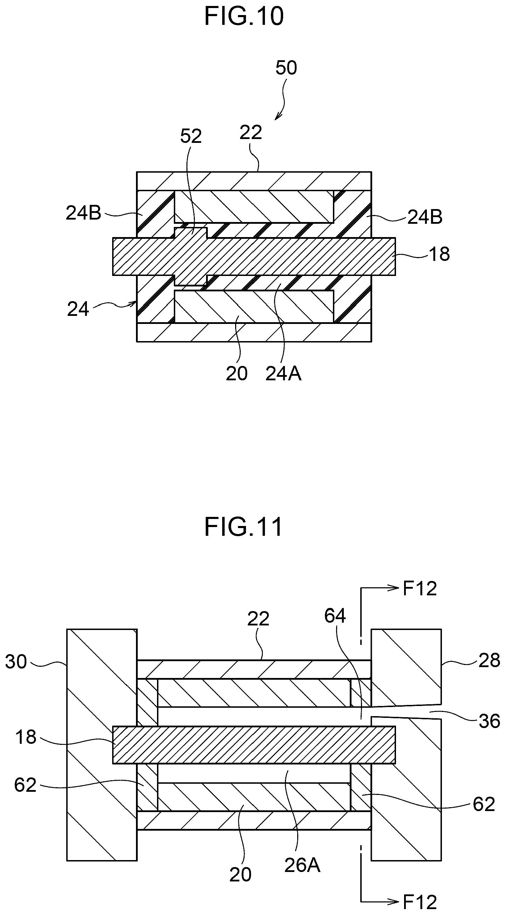

Fig. 9 illustrates a cross-section of a state in a resin filling process in a rotor manufacturing method according to a third exemplary embodiment of the present disclosure. Fig. 10 illustrates a cross-section of a rotor 50 manufactured by the rotor manufacturing method according to the third exemplary embodiment. In this exemplary embodiment a collar-shaped collar portion 52 is formed at part of the outer periphery of the rotor shaft 18. The permanent magnet 20 and the rotor shaft 18 are disposed coaxially by an outer peripheral face of the collar portion 52 engaging (contacting) the inner peripheral face of the permanent magnet 20, and a gap 26A is formed for filling the resin 24 in liquid form between the rotor shaft 18 and the permanent magnet 20. The permanent magnet 20 is broken by the charging pressure of the high pressure resin 24 being filled in the gap 26A and the flange shaped gaps 26B, and the magnet reinforcement pipe 22 is expanded in diameter.

In the present exemplary embodiment, configuration other than described above is similar to that of the first exemplary embodiment, and basically the same operation and advantageous effects are achieved to those of the first exemplary embodiment. Moreover, in the present exemplary embodiment, the outer peripheral face of the collar portion 52 formed at part of the outer periphery of the rotor shaft 18 is engaged with the inner peripheral face of the permanent magnet 20, and the cylindrical shaped gap 26A is formed for filling the resin 24 in liquid form between the rotor shaft 18 and the permanent magnet 20. This means that there is no need for a positioning tool to achieve concentricity between the rotor shaft 18 and the permanent magnet 20.

### Fourth Exemplary Embodiment

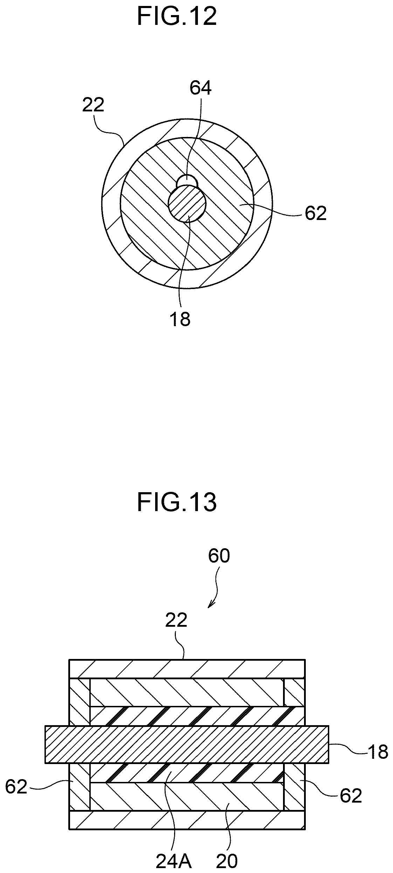

Fig. 11 illustrates a cross-section of a state in a resin filling process of a rotor manufacturing method according to a fourth exemplary embodiment of the present disclosure, and Fig. 12 illustrates a cross-section of a section taken along line F12-F12 of Fig. 11. Fig. 13 illustrates a cross-section of a configuration of a rotor 60 according to the fourth exemplary embodiment of the present disclosure. In this exemplary embodiment a pair of circular plate-shaped end rings 62 are arranged at the two axial direction sides with respect to the permanent magnet 20. A through hole 64 is formed at a center of the pair of end rings 62 for the rotor shaft 18 to pass through. An outer diameter dimension of the pair of end rings 62 is set as not less than the outer diameter dimension of the permanent magnet 20, and the outer peripheral faces of the pair of end rings 62 engage with the inner peripheral face of a magnet reinforcement pipe. This means that a cylindrical shaped gap 26A is formed between the rotor shaft 18 and the permanent magnet 20. A resin-filling hole 64 in communication with the gap 26A is formed at least in one (only one in this case) of the pair of end rings 62. The resin 24 is filled in liquid form into the gap 26A through the resin-filling hole 64. The permanent magnet 20 is broken by the charging pressure of the resin 24, and the magnet reinforcement pipe 22 is expanded in diameter.

In this exemplary embodiment, configuration other than described above is similar to that of the first exemplary embodiment, and basically the same operation and advantageous effects are achieved to those of the first exemplary embodiment. Moreover, in this exemplary embodiment, the cylindrical shaped gap 26A can be formed for filling the resin 24 in liquid form between the rotor shaft 18 and the permanent magnet 20 while achieving concentricity between the rotor shaft 18 and the permanent magnet 20 using the pair of end rings 62. In addition thereto, the resin 24 can be filled in liquid form into the gap 26A through the resin-filling hole 64 formed in one of the pair of end rings 62. In this exemplary embodiment too, there is no need for a positioning tool to achieve concentricity between the rotor shaft 18 and the permanent magnet 20.

### Fifth Exemplary Embodiment

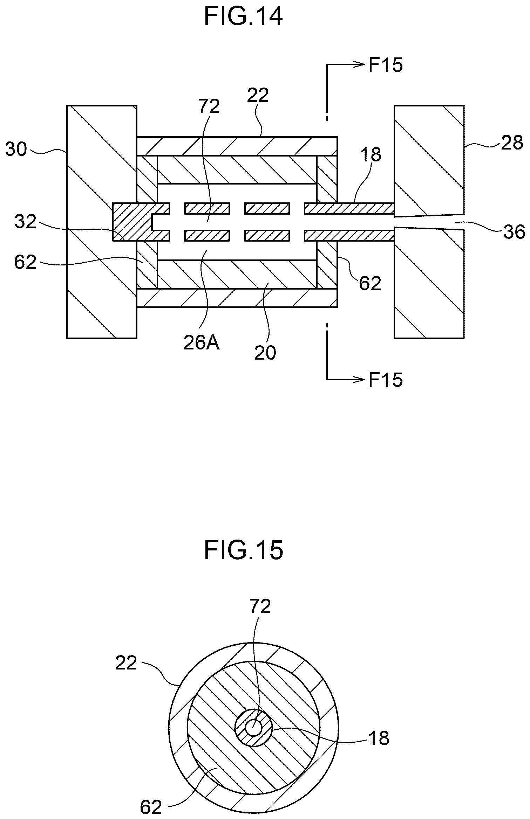

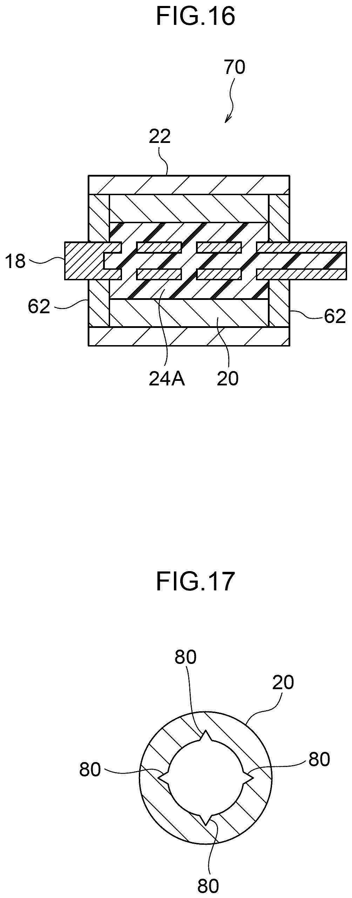

Fig. 14 is a cross-section illustrating a state in a resin filling process of a rotor manufacturing method according to a fifth exemplary embodiment of the present disclosure, and Fig. 15 is a cross-section illustrating a section taken along line F15-F15 of Fig. 14. Fig. 16 illustrates a cross-section of a configuration of a rotor 70 according to the fifth exemplary embodiment of the present disclosure. In this exemplary embodiment, similarly to in the fourth exemplary embodiment, a pair of circular plate-shaped end rings 62 is arranged at the two axial direction sides with respect to the permanent magnet 20, and a cylindrical shaped gap 26A is formed between the rotor shaft 18 and the permanent magnet 20.

A resin-filling flow path 72 is formed in the rotor shaft 18 instead of the resin-filling hole 64 of the fourth exemplary embodiment. The resin-filling flow path 72 extends from one axial direction end face of the rotor shaft 18 to a portion on the other axial direction end side of the rotor shaft 18, and also branches toward the radial direction outside of the rotor shaft 18 at plural locations of an axial direction intermediate portion of the rotor shaft 18. The resin-filling flow path 72 opens onto plural locations on the outer peripheral face and onto one axial direction end face of the rotor shaft 18, and is in communication with the gap 26A. The one axial direction end face of the rotor shaft 18 is abutted against one mold, and the resin-filling gate 36 and the resin-filling flow path 72 are in communication with each other. The resin 24 is filled in liquid form through the resin-filling flow path 72 and into the gap 26A. The permanent magnet 20 is broken by the charging pressure of the resin 24, and the magnet reinforcement pipe 22 is expanded in diameter.

In this exemplary embodiment, configuration other than described above is similar to that of the first exemplary embodiment, and basically the same operation and advantageous effects are achieved to those of the first exemplary embodiment. Moreover, in this exemplary embodiment the cylindrical shaped gap 26A can be formed for filling the resin 24 in liquid form between the rotor shaft 18 and the permanent magnet 20 while achieve concentricity between the rotor shaft 18 and the permanent magnet 20 using the pair of end rings 62. In addition thereto, the resin 24 can be filled in liquid form into the gap 26A through the resin-filling flow path 72 formed in the rotor shaft 18. In this exemplary embodiment too, there is no need for a positioning tool to achieve concentricity between the rotor shaft 18 and the permanent magnet 20.

### Sixth Exemplary Embodiment

Fig. 17 illustrates a cross-section of a configuration of a permanent magnet 20 provided to a rotor according to a sixth exemplary embodiment of the present disclosure. The rotor according to the present exemplary embodiment is configured basically the same as the rotor 12, the rotor 40, the rotor 50, the rotor 60, or the rotor 70 described above, however notches (indentations) 80 that serve as origin points when the permanent magnet 20 breaks are formed along the axial direction of the permanent magnet 20 to the inner peripheral face of the permanent magnet 20 before the resin 24 is filled between the rotor shaft 18 and the permanent magnet 20. In Fig. 17 there are, for example, four notches 80 formed at the inner peripheral face of the permanent magnet 20 at uniform intervals around the circumferential direction of the permanent magnet 20. Each of the notches 80 is, for example, formed with a triangular profile having an apex facing toward the radial direction outside of the permanent magnet 20 when viewed along the axial direction of the permanent magnet 20. The permanent magnet 20 breaks about origin points of each of the notches 80 when the resin 24 is filled between the rotor shaft 18 and the permanent magnet 20. This enables the permanent magnet 20 to be broken in a pre-set manner.

Although the present disclosure has been described by way of a number of exemplary embodiments, the present disclosure can be implemented by various modifications within a range not departing from the spirit thereof. Moreover, the scope of rights of the present disclosure is obviously not limited by each of the exemplary embodiments.

The entire content of the disclosure of Japanese Patent Application No. 2021-171115 filed on October 19, 2021 is incorporated by reference in the present specification. All publications, patent applications and technical standards mentioned in the present specification are incorporated by reference in the present specification to the same extent as if each individual publication, patent application, or technical standard was specifically and individually indicated to be incorporated by reference.

## Claims

1. A manufacturing method for a rotor comprising a rotor shaft, a permanent magnet retained at an outer periphery of the rotor shaft with a resin interposed therebetween, and a magnet reinforcement pipe formed in a cylindrical shape and covering the permanent magnet from an outer peripheral side, wherein the rotor manufacturing method comprises:
filling the resin in liquid form between the rotor shaft and the permanent magnet;
breaking the permanent magnet using charging pressure of the resin; and
expanding a diameter of the magnet reinforcement pipe.

2. The rotor manufacturing method of claim 1, wherein a groove extending along an axial direction is formed at the outer periphery of the rotor shaft, and the resin is filled in liquid form between the rotor shaft and the permanent magnet through the groove.

3. The rotor manufacturing method of claim 1, wherein:
a collar-shaped collar portion is formed at part of the outer periphery of the rotor shaft;
a gap is formed between the rotor shaft and the permanent magnet by an outer peripheral face of the collar portion being engaged with an inner peripheral face of the permanent magnet; and
the resin is filled in liquid form into the gap.

4. The rotor manufacturing method of claim 1, wherein:
a pair of circular plate-shaped end rings are arranged at two axial direction sides with respect to the permanent magnet;
a gap is formed between the rotor shaft and the permanent magnet by passing the rotor shaft through a center of each of the pair of end rings and also by engaging an outer peripheral face of each of the pair of end rings with an inner peripheral face of the magnet reinforcement pipe; and
the resin is filled in liquid form into the gap through a resin-filling hole formed in at least one of the pair of end rings.

5. The rotor manufacturing method of claim 1, wherein:
a pair of circular plate-shaped end rings are arranged at two axial direction sides with respect to the permanent magnet;
a gap is formed between the rotor shaft and the permanent magnet by passing the rotor shaft through a center of each of the pair of end rings and also engaging an outer peripheral face of each of the pair of end rings with an inner peripheral face of the magnet reinforcement pipe; and
the resin is filled in liquid form into the gap through a resin-filling flow path formed in the rotor shaft.

6. The rotor manufacturing method of any one of claim 1 to claim 5, wherein a notch to serve as an origin point when breaking the permanent magnet is formed at an inner peripheral face of the permanent magnet.

7. A rotor comprising:
a rotor shaft;
a permanent magnet retained at an outer periphery of the rotor shaft with a resin interposed therebetween; and
a magnet reinforcement pipe formed in a cylindrical shape and covering the permanent magnet from the outer peripheral side,
wherein a crack is formed spanning in a radial direction of the permanent magnet, and the crack is filled with the resin.

8. The rotor of claim 7, wherein a groove extending along an axial direction is formed at an outer periphery of the rotor shaft, and the groove is filled with the resin.

9. The rotor of claim 7, wherein:
an outer peripheral face of a collar portion formed in a collar shape at part of an outer periphery of the rotor shaft is engaged with an inner peripheral face of the permanent magnet; and
a gap formed between the rotor shaft and the permanent magnet is filled with the resin.

10. The rotor of claim 7, further comprising:
a pair of circular plate-shaped end rings arranged at two axial direction sides with respect to the permanent magnet, the rotor shaft passing through a center of each of the end rings, and an outer peripheral face of each of the end rings being engaged with an inner peripheral face of the magnet reinforcement pipe,
wherein a gap formed between the rotor shaft and the permanent magnet and a resin-filling hole formed in at least one of the pair of end rings are filled with the resin.

11. The rotor of claim 7, further comprising:
a pair of circular plate-shaped end rings arranged at two axial direction sides with respect to the permanent magnet, the rotor shaft passing through a center of each of the end rings, and an outer peripheral face of each of the end rings being engaged with an inner peripheral face of the magnet reinforcement pipe,
wherein a gap formed between the rotor shaft and the permanent magnet and a resin-filling flow path formed in the rotor shaft are filled with the resin.

12. A rotating electric machine comprising:
the rotor of any one of claim 7 to claim 11; and
a stator that generates a rotating magnetic field for the rotor.
